# DEMANDE DE BREVET EUROPEEN

(11) **EP 3 442 197 A1**
(43) Date de publication de la demande: **13.02.2019**
(21) Numéro de dépôt: 18186957.9
(22) Date de dépôt: 02.08.2018
(51) Int. Cl.: H04L 29/06, H04M 3/42

(54) **PROCÉDÉ ET PROXY SIP DE GESTION DES APPELS DANS UN RÉSEAU DE VOIX SUR IP**

(30) Priorité: 10.08.2017 FR 1757622
(71) Demandeur: Orange, 75015 Paris (FR)
(72) Inventeur: PASCUAL, Juan, 92130 ISSY-LES-MOULINEAUX (FR); FOUQUET, Stéphane, 92150 SURESNES (FR); LABRANCHE, Miguel, 94380 BONNEUIL-SUR-MARNE (FR)
(74) Mandataire: Cabinet Beau de Loménie

(57) **Abrégé**

Ce procédé de gestion des appels dans un réseau de voix sur IP est mis en oeuvre par un proxy SIP (10). Il comporte :
- une étape (E10) de réception d'une requête d'enregistrement émise par un terminal de voix sur IP (20) pour s'enregistrer auprès dudit proxy SIP (10);
- une étape (E20) d'obtention, auprès d'une base de données (45), de l'adresse d'au moins une plateforme de voix sur IP (40₃, 40₄) associée audit terminal de voix sur IP (20) ;
- une étape (E30) d'enregistrement dudit proxy SIP (10) auprès d'une dite plateforme de voix sur IP (40₃) ;
- une étape (E70) d'envoi, à un serveur de portabilité des numéros (50) apte à gérer les appels entrants destinés audit terminal de voix sur IP (20), d'une requête pour que ledit serveur (50) associe le numéro de téléphone dudit terminal de voix sur IP (20) avec un préfixe de routage (PF₃) associé à ladite plateforme de voix sur IP (40₃).

## Description

### Arrière-plan de l'invention

L'invention se situe dans le domaine de la sécurisation des réseaux de communication, et plus particulièrement dans celui de la sécurisation des réseaux de voix sur IP.

Dans l'état actuel de la technique des réseaux de voix sur IP, les terminaux de voix sur IP ou les autocommutateurs téléphonique privés de type IPBX accèdent au réseau de voix sur IP via une plateforme de voix sur IP auprès de laquelle ils sont enregistrés, le choix de cette plateforme étant défini par l'opérateur au moment de la souscription de l'utilisateur au service de voix sur IP.

Pour éviter une rupture de service de téléphonie en cas de défaillance de la plateforme de voix sur IP, les opérateurs prévoient généralement un mécanisme de secours consistant à router les appels via le réseau RTC ou le réseau RNIS.

L'invention vise une autre solution pour à sécuriser les réseaux de voix sur IP.

### Objet et résumé de l'invention

Plus précisément, l'invention concerne un procédé de gestion des appels dans un réseau de voix sur IP, ce procédé étant mis en oeuvre par un proxy SIP et comportant :
- une étape de réception d'une requête d'enregistrement émise par un terminal de voix sur IP pour s'enregistrer auprès dudit proxy SIP;
- une étape d'obtention, auprès d'une base de données, de l'adresse d'au moins une plateforme de voix sur IP associée audit terminal ;
- une étape d'enregistrement du proxy SIP auprès d'une dite plateforme de voix sur IP ;
- une étape d'envoi, à un serveur de portabilité des numéros apte à gérer les appels entrants destinés audit terminal de voix sur IP, d'une requête pour que ce serveur associe le numéro de téléphone du terminal de voix sur IP avec un préfixe de routage associé à la plateforme de voix sur IP.

Corrélativement, l'invention concerne un proxy SIP comportant :
- un module de réception d'une requête d'enregistrement émise par un terminal de voix sur IP pour s'enregistrer auprès dudit proxy SIP;
- un module d'obtention, auprès d'une base de données, de l'adresse d'au moins une plateforme de voix sur IP associée audit terminal;
- un module d'enregistrement dudit proxy SIP auprès d'une dite plateforme de voix sur IP ;
- un module d'envoi, à un serveur de portabilité des numéros apte à gérer les appels entrants destinés audit terminal de voix sur IP, d'une requête pour que ledit serveur associe le numéro de téléphone du terminal de voix sur IP avec un préfixe de routage associé à cette plateforme de voix sur IP.

L'invention offre ainsi une solution pour définir la plateforme de voix sur IP utilisée par un terminal de voix sur IP. Pour permettre l'affectation dynamique d'une plateforme de voix sur IP à un terminal, et assurer que les appels entrants soient routés vers ce terminal, l'invention propose d'associer au numéro de téléphone de ce terminal, au niveau d'un serveur de portabilité des numéros, un préfixe de routage unique correspondant à cette plateforme.

Pour plus de renseignements sur le service de portabilité des numéros, l'homme du métier peut se reporter aux documents suivants :
- https://www.arcep.fr/fileadmin/reprise/dossiers/pnm/Pres-PNM-091107.pdf, et
- https://en.wikipedia.org/wiki/Local_number_portability.

Dans un mode particulier de réalisation de l'invention, au cours de ladite étape d'obtention, le proxy SIP obtient, auprès de la base de données précitée, l'adresse d'une plateforme de voix sur IP nominale et l'adresse d'au moins une plateforme de voix sur IP de secours, ces plateformes étant associées au terminal, et l'étape d'enregistrement du proxy SIP est effectuée de façon privilégiée auprès de la plateforme de voix sur IP nominale, et en cas d'échec auprès d'une desdites plateformes de voix sur IP de secours selon un ordre de priorité associé à ces plateformes de secours.

L'invention permet ainsi de sécuriser un réseau de voix sur IP en permettant à un terminal de voix sur IP de communiquer de façon dynamique avec plusieurs plateformes de voix sur IP. Elle améliore ainsi le service de voix sur IP par un mécanisme de redondance, en cas de panne d'une plateforme, et des possibilités de répartition dynamique du trafic pour répondre à des problèmes de dimensionnement.

Dans un mode particulier de réalisation de l'invention, le procédé comporte :
- une étape de détection d'une panne affectant la plateforme VoIP auprès de laquelle ledit dispositif proxy est enregistré ;
- une étape d'enregistrement dudit proxy SIP auprès d'une des plateformes de voix sur IP de secours selon l'ordre de priorité précité; et
- une étape d'envoi, au serveur de portabilité des numéros d'une requête pour que ce serveur associe le numéro de téléphone du terminal de voix sur IP avec un préfixe de routage associé à cette plateforme de voix sur IP de secours.

Dans un mode particulier de réalisation de l'invention, le procédé comporte également :
- une étape de détection d'un état de fonctionnement normal de ladite plateforme de voix sur IP nominale ;
- une étape d'attente que le dispositif proxy ne gère plus un appel ; et
- une étape d'envoi, au serveur de portabilité des numéros d'une requête pour que ce serveur associe le numéro de téléphone du terminal de voix sur IP avec un préfixe de routage associé à la plateforme de voix sur IP nominale.

Le procédé mis en oeuvre par le dispositif proxy selon l'invention permet également le routage des appels de voix sur IP entrants et sortants.

En particulier, dans un mode particulier de réalisation de l'invention, le procédé comporte :
- une étape de routage, vers le terminal de voix sur IP, d'un appel entrant destiné à ce terminal et reçu de la plateforme de voix sur IP auprès de laquelle ledit dispositif proxy est enregistré.

De même, dans un mode particulier de réalisation de l'invention, le procédé comporte :
- une étape de réception d'un appel émis par ledit terminal de voix sur IP ; et
- une étape de routage dudit appel vers la plateforme VoIP auprès de laquelle ledit dispositif proxy est enregistré.

Dans un mode particulier de réalisation, les différentes étapes du procédé de gestion d'appel sont déterminées par des instructions de programmes d'ordinateurs.

En conséquence, l'invention vise aussi un programme d'ordinateur, sur un support d'informations, ce programme comportant des instructions adaptées à la mise en oeuvre des étapes d'un procédé de gestion d'appel selon l'invention.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 représente un réseau dans lequel l'invention peut être mise en oeuvre;
- la figure 2 représente les principales étapes d'une procédure d'enregistrement d'un terminal de voix sur IP conforme à un mode de réalisation de l'invention ;
- la figure 3 représente les principales étapes d'un traitement d'un appel entrant conforme à un mode de réalisation de l'invention;
- la figure 4 représente les principales étapes d'un traitement d'un appel sortant conforme à un mode de réalisation de l'invention ;
- la figure 5 représente les principales étapes d'une procédure de bascule d'une plateforme VoIP nominale vers une plateforme VoIP de secours conforme à un mode de réalisation de l'invention ;
- la figure 6 représente les principales étapes d'une procédure de retour au mode nominal conforme à un mode de réalisation de l'invention ;
- la figure 7 représente l'architecture matérielle d'un dispositif proxy conforme à un mode de réalisation de l'invention.

### Description détaillée d'un mode de réalisation de l'invention.

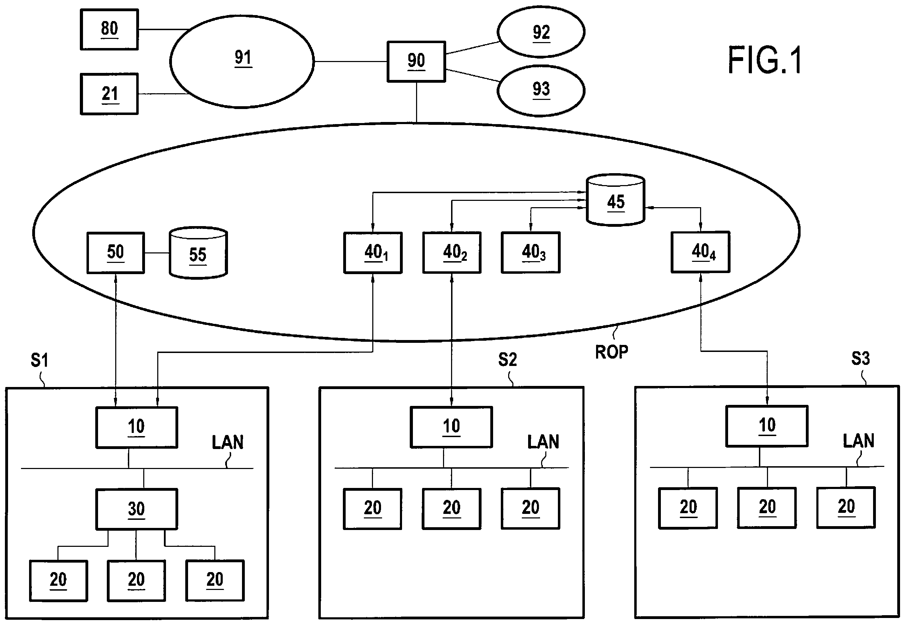

La **figure 1** représente un réseau dans lequel l'invention peut être mise en oeuvre.

Ce réseau comporte trois sites S1, S2, S3, chacun des sites comportant un dispositif proxy 10 conforme à l'invention.

Dans le site S1, trois terminaux de voix sur IP 20 sont connectés directement à un autocommutateur téléphonique privé IPBX (de l'anglais Internet Protocol Private Branch eXchange) 30, cet autocommutateur étant connecté au dispositif proxy 10 selon l'invention via un réseau local de type LAN.

Dans les sites S2 et S3, trois terminaux de voix sur IP 20 et le dispositif proxy 10 selon l'invention sont interconnectés via un réseau local de type LAN.

Pour chacun des sites S1 à S3, le dispositif proxy 10 selon l'invention peut être intégré dans un équipement quelconque du réseau local de type LAN, par exemple dans l'autocommutateur privé IPBX 30, dans un terminal SIP 20 ou dans un routeur d'interconnexion avec le réseau SIP (Session Initiation Protocol) de voix sur IP de l'opérateur, référence ci-après ROP. Ce routeur peut notamment être une passerelle domestique apte à délivrer des services de téléphonie, de télévision et d'accès Internet aux terminaux 20.

Le réseau SIP de voix sur IP (VoIP) de l'opérateur ROP comporte une pluralité de plateformes VoIP 40ᵢ, chacune d'entre elles étant configurée pour accéder à une même base de données utilisateurs 45.

Dans ce mode de réalisation, la base de données utilisateurs 45 associe à chaque utilisateur SIP, une plateforme VoIP nominale et au moins une plateforme VoIP de secours. Elle comporte en outre des informations sur chaque utilisateur, en particulier ses données d'authentification AUTH (identifiant et mot de passe).

Le réseau SIP de voix sur IP de l'opérateur ROP comporte en outre un serveur d'application, SPN 50, de portabilité des numéros d'application, configuré pour accéder à une base de données SPN 55. La base de données SPN 55 contient la liste de tous les numéros de téléphone des abonnés de l'opérateur du réseau ROP.

Pour chaque abonné, le numéro de téléphone de cet abonné est associé à un préfixe de routage unique et propre à la plateforme de voix sur IP 40 avec laquelle le terminal de voix sur IP 20 de cet abonné peut communiquer. La figure 1 a été simplifiée à cet égard mais tous les dispositifs proxy 10 sont configurés pour pouvoir communiquer avec le serveur SPN 50.

Dans cet exemple le réseau SIP de voix sur IP ROP de l'opérateur est connecté, à une passerelle 90 assurant l'interconnexion entre ce réseau ROP et un autre réseau, par exemple un autre réseau 91 de téléphonie SIP de voix sur IP, un réseau de télécommunications mobile 92 ou un réseau ISUP (ISDN (Integrated Services Digital Network) User Part) 93.

Dans le mode de réalisation décrit ici, le réseau 91 de téléphonie SIP de voix sur IP comporte un serveur 80 d'auto-réponse et des terminaux de voix sur IP 21.

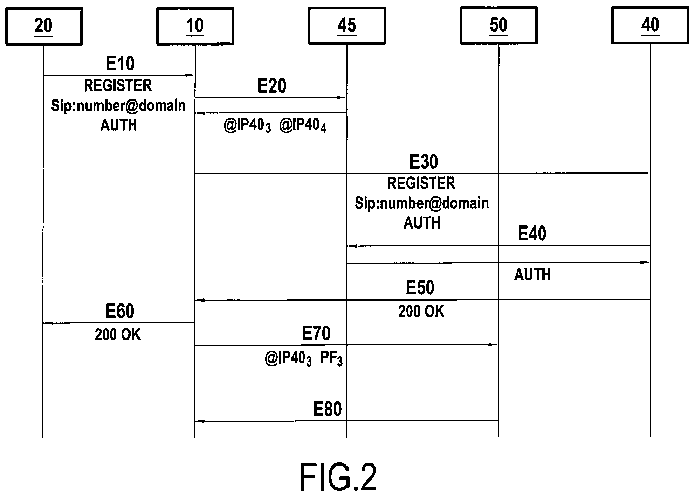

La **figure 2** représente les principales étapes d'une procédure d'enregistrement d'un terminal de voix sur IP 20 auprès d'une plateforme VoIP 40ᵢ conformément à un mode de réalisation de l'invention.

Au cours d'une étape E10, le terminal de voix sur IP 20 envoie une requête pour s'enregistrer auprès du dispositif proxy 10 selon l'invention. Cette requête est une requête de type REGISTER. Elle comporte l'adresse sip :number@domain du terminal 20 ainsi que les données AUTH d'authentification de l'utilisateur (identifiant, mot de passe). Cette requête d'enregistrement est reçue par le dispositif proxy 10 au cours de la même étape E10.

Au cours d'une étape E20, le dispositif proxy 10 interroge la base de données utilisateur 45, par exemple en utilisant une requête HTTP (HyperText Transfer Protocol), pour obtenir l'adresse IP de la plateforme VoIP 40ᵢ auprès de laquelle ce dispositif proxy 10 doit s'enregistrer. Il communique à cet effet le numéro SIP du terminal de voix sur IP 20.

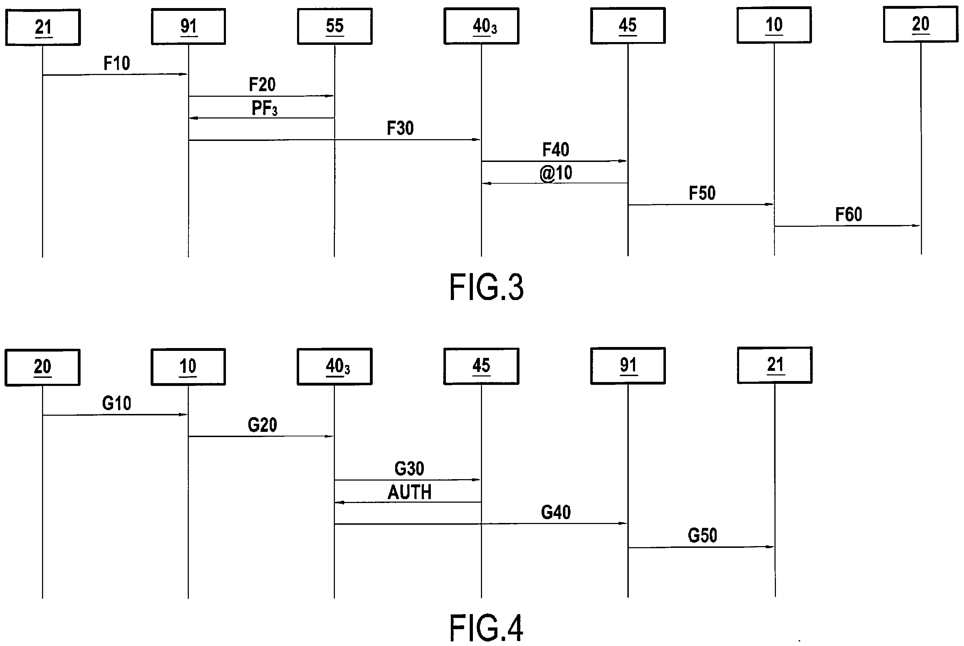

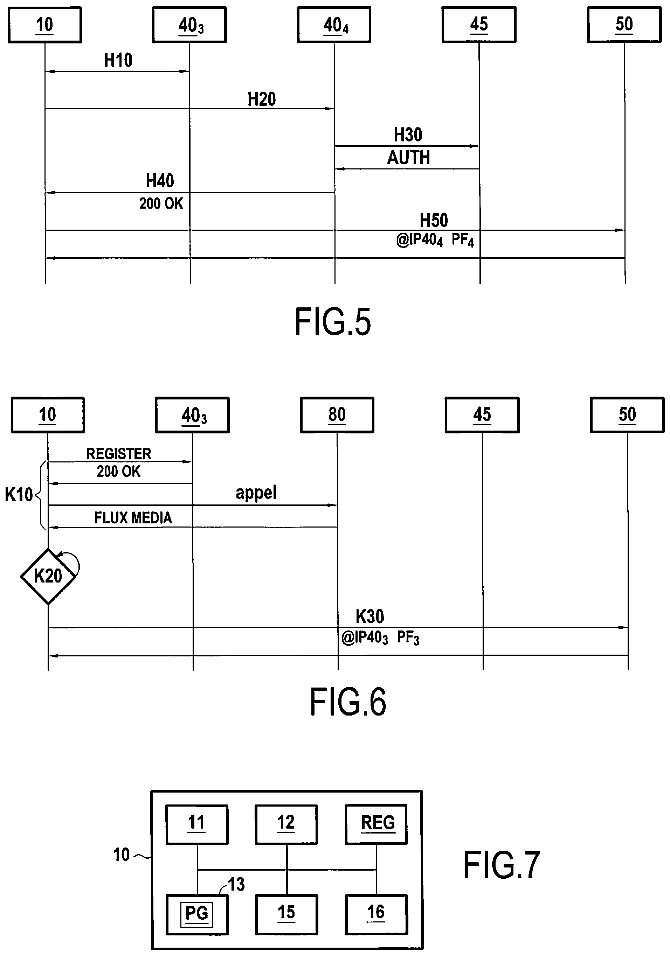

Le dispositif proxy 10 obtient en réponse, au cours de cette même étape E20, l'adresse IP d'une plateforme nominale, par exemple de la plateforme VoIP 40₃ et au moins une adresse IP d'une plateforme VoIP de secours associée au terminal de voix sur IP 20, par exemple de la plateforme VoIP 40₄. Le dispositif proxy 10 mémorise les adresses de ces plateformes pour pouvoir ultérieurement et notamment :
- router des appels sortants initiés par le terminal de voix sur IP 20, comme décrit en référence à la figure 4 ;
- et basculer de la plateforme nominale (par exemple 40₃) vers une plateforme de secours (par exemple 40₄) en cas de dysfonctionnement de la plateforme nominale, comme décrit en référence à la figure 5.

Au cours d'une étape E30, le dispositif proxy 10 s'enregistre auprès de la plateforme VoIP nominale 40₃ si celle-ci est disponible, en envoyant à cette plateforme une requête REGISTER comportant les données reçues dans la requête REGISTER à l'étape E10. Si la plateforme nominale n'est pas disponible, il s'enregistre auprès d'une des plateformes VoIP de secours dont il a reçu l'adresse.

Au cours d'une étape E40, la plateforme VoIP 40₃ interroge la base de données 45 pour obtenir en particulier les données d'authentification AUTH de l'utilisateur du terminal de voix sur IP 20, à savoir son identifiant et son mot de passe.

Si les données d'authentification obtenues auprès de la base de données 45 correspondent aux données d'authentification reçues dans la requête d'enregistrement à l'étape E30, la plateforme VoIP 40₃ envoie au dispositif proxy 10, au cours d'une étape E50, une réponse de type 200 OK pour acquitter la requête REGISTER reçue à l'étape E30.

Sur réception de cette réponse, le dispositif proxy 10 envoie (étape E60) une réponse de type 200 OK pour acquitter la requête REGISTER reçue à l'étape E10.

Au cours d'une étape E70, le dispositif proxy 10 envoie au serveur d'application SPN 50 une requête (par exemple une requête HTTP) comportant :
- l'adresse IP de la plateforme VoIP auprès de laquelle le terminal de voix sur IP 20 est enregistré, en l'occurrence l'adresse IP de la plateforme VoIP 40₃; et
- le numéro de téléphone du terminal de voix sur IP 20.

Sur réception de cette requête le serveur d'application SPN 50 met à jour la base de données SPN 55 en associant au numéro de téléphone du terminal de voix sur IP 20, le préfixe de routage PF₃ de la plateforme de voix sur IP 40₃.

Le serveur d'application SPN répond à cette requête au cours de cette même étape E80.

La **figure 3** représente les principales étapes du traitement d'un appel entrant émis par un terminal de voix sur IP 21 du réseau 91 et destiné à un terminal de voix sur IP 20 d'un des sites S1, S2 ou S3 conformément à un mode de réalisation de l'invention.

On suppose que l'appel émis par le terminal de voix sur IP 21 est présenté au réseau de téléphonie SIP de voix sur IP 91 au cours d'une étape F10.

Au cours d'une étape F20, la passerelle 90 interroge la base de données SPN 55 pour connaître le préfixe de routage pour le numéro demandé. Ce numéro a été renseigné dans la base de données 55 au cours de l'étape E70 de la procédure d'enregistrement déjà décrite. Il correspond au préfixe de routage PF₃ de la plateforme VoIP 40₃ affectée par le dispositif proxy 10 au terminal de voix sur IP 20.

Le réseau de voix sur IP de l'opérateur ROP route l'appel vers la plateforme VoIP 40₃ (étape F30).

Au cours d'une étape F40, la plateforme VoIP 40₃ interroge la base de données utilisateurs 45 pour récupérer les informations de l'utilisateur appelé et en particulier l'adresse du dispositif proxy 10 vers lequel router l'appel.

Au cours d'une étape F50, la plateforme VoIP 40₃ route l'appel vers ce dispositif proxy 10.

Le dispositif proxy 10 route l'appel vers le terminal de voix sur IP 20 appelé au cours d'une étape F60.

La **figure 4** représente les principales étapes d'un traitement d'un appel sortant initié par un terminal de voix sur IP 20 et destiné au terminal de voix sur IP 21 connecté au réseau SIP de voix sur IP 91 conformément à un mode de réalisation de l'invention.

On suppose que le terminal de voix sur IP 20 a préalablement envoyé au dispositif proxy 10 une requête d'enregistrement REGISTER comportant l'adresse sip:number@domain du terminal 20 ainsi que les données d'authentification AUTH de l'utilisateur (identifiant, mot de passe) du terminal 20, comme décrit précédemment en référence à l'étape E10 et que ce terminal 20 envoie une requête INVITE d'initiation d'appel au dispositif proxy 10 au cours d'une étape G10.

Au cours d'une étape G20, le dispositif proxy 10 route l'appel vers la plateforme VoIP 40₃ dont il a reçu l'identifiant au cours de l'étape E20 de la procédure d'enregistrement déjà décrite.

Au cours d'une étape G30, la plateforme VoIP 40₃ interroge la base de données utilisateurs 45 pour récupérer les données d'authentification AUTH de l'utilisateur du terminal appelant 20 de façon à vérifier que l'utilisateur ayant initié l'appel est autorisé à émettre des appels sur le réseau ROP.

Au cours d'une étape G40, la plateforme VoIP 40₃ route l'appel vers le réseau 91 de téléphonie de voix sur IP.

Ce réseau 91 route l'appel vers le terminal de voix sur IP 21 appelé au cours d'une étape G50.

La **figure 5** représente les principales étapes d'une procédure de bascule d'une plateforme VoIP nominale 40₃ vers une plateforme VoIP de secours 40₄ conformément à un mode de réalisation de l'invention.

Au cours d'une étape H10, le dispositif proxy 10 détecte que la plateforme VoIP nominale 40₃ auprès de laquelle il s'est enregistré à l'étape E30 n'est plus utilisable. Cet état est détecté lorsque le dispositif proxy 10 ne reçoit pas de réponse dans un délai prédéterminé compté à partir de l'envoi d'une requête de type REGISTER ou INVITE.

Au cours d'une étape H20, le dispositif proxy 10 s'enregistre auprès d'une plateforme VoIP de secours dont il a reçu l'identifiant au cours de l'étape E20 déjà décrite, par exemple la plateforme VoIP 40₄. Cette étape est similaire à l'étape E30 déjà décrite.

Au cours d'une étape H30, identique à l'étape E40 déjà décrite, la plateforme VoIP 40₄ de secours interroge la base de données 45 pour obtenir les données d'authentification AUTH de l'utilisateur du terminal de voix sur IP 20, notamment son identifiant et son mot de passe.

Une fois ces informations obtenues, au cours d'une étape H40, la plateforme VoIP 40₄ de secours envoie au dispositif proxy 10 une réponse de type 200 OK pour acquitter la requête REGISTER reçue à l'étape H20.

Au cours d'une étape H50, identique à l'étape E70 déjà décrite, le dispositif proxy 10 envoie une requête au serveur d'application SPN 50 pour lui indiquer auprès de quelle plateforme VoIP 40 de secours le terminal de voix sur IP 20 est enregistré. Sur réception de cette requête le serveur d'application SPN 50 met à jour la base de données SPN 55 en associant au numéro de téléphone du terminal de voix sur IP 20, le préfixe de routage PF₄ de la plateforme VoIP de secours 40₄. Le serveur d'application SPN répond à cette requête au cours de cette même étape H50.

La **figure 6** représente les principales étapes d'une procédure de retour au mode nominal conforme à un mode de réalisation de l'invention.

Au cours d'une étape K10, le dispositif proxy 10 teste l'état de sa plateforme VoIP nominale 40₃. Pour ce faire, il s'enregistre auprès de cette plateforme puis émet un appel vers le serveur d'auto-réponse 80 du réseau VoIP. Si le serveur 80 reçoit cet appel, il y répond et envoie un flux média au dispositif proxy 10. Si le dispositif proxy 10 reçoit ce flux média, il considère que la plateforme VoIP nominale 40₃ est en état de fonctionnement normal.

Au cours d'une étape K20, le dispositif proxy 10 attend qu'il n'y ait plus d'appel en cours.

Au cours d'une étape K30, identique à l'étape E70 déjà décrite, le dispositif proxy 10 envoi une requête au serveur d'application SPN 50 pour lui indiquer qu'il est enregistré auprès de la plateforme 40 nominale. Sur réception de cette requête le serveur d'application SPN 50 met à jour la base de données SPN 55 en associant au numéro de téléphone du terminal de voix sur IP 20, le préfixe PF₃ de la plateforme de voix sur IP nominale 40₃. Le serveur d'application SPN 50 répond à cette requête au cours de cette même étape K30.

Dans le mode de réalisation décrit ici, ce dispositif proxy 10 a l'architecture matérielle d'un ordinateur. En référence à la **figure 7****,** ce dispositif proxy 10 comporte en particulier un processeur 11, une mémoire vive de type RAM 12, une mémoire morte de type ROM 13, des premiers moyens de communication 15 pour communiquer avec les dispositifs de voix sur IP du LAN, et des deuxièmes moyens de communication 16 pour communiquer avec les équipements du réseau de l'opérateur ROP.

Ce dispositif proxy 10 comporte également un module REG de type REGISTRAR pour enregistrer le proxy SIP 10 auprès d'une dite plateforme de voix sur IP 40ᵢ.

La mémoire morte de type ROM 13 constitue un support d'enregistrement conforme à l'invention. Elle mémorise un programme d'ordinateur PG conforme à l'invention et apte à mettre en oeuvre les principales étapes d'un procédé de gestion d'appel précédemment décrites.

Les premiers moyens de communication 15 sont configurés pour pouvoir recevoir des requêtes d'enregistrement émises par les terminaux de voix sur IP 20 pour s'enregistrer auprès d'une plateforme 40ᵢ de voix sur IP.

Les deuxièmes moyens de communication 16 sont configurés pour pouvoir obtenir, auprès de la base de données, l'adresse d'au moins une plateforme de voix sur IP associée au proxy SIP.

Les deuxièmes moyens de communication 16 sont également configurés pour pouvoir envoyer les requêtes d'enregistrement précitées, au serveur de portabilité des numéros 50.

Les premiers moyens de communication 15 et les deuxièmes moyens de communication 16 sont configurés pour acheminer des appels VoIP sortants et entrants.

En mettant en oeuvre le programme d'ordinateur PG, le processeur 11 est apte à détecter une panne affectant une plateforme VoIP 40ᵢ, à basculer vers une plateforme VoIP de secours lorsqu'une telle panne est détectée, et à revenir au mode nominal lorsque la plateforme VoIP nominale est dans un état normal de fonctionnement.

## Revendications

1. Procédé de gestion des appels dans un réseau de voix sur IP, ce procédé étant mis en oeuvre par un proxy SIP (10) et comportant :
- une étape (E10) de réception d'une requête d'enregistrement émise par un terminal de voix sur IP (20) pour s'enregistrer auprès dudit proxy SIP (10);
- une étape (E20) d'obtention, auprès d'une base de données (45), de l'adresse d'au moins une plateforme de voix sur IP (40₃, 40₄) associée audit terminal de voix sur IP (20) ;
- une étape (E30) d'enregistrement dudit proxy SIP (10) auprès d'une dite plateforme de voix sur IP (40₃);
- une étape (E70) d'envoi, à un serveur de portabilité des numéros (50) configuré pour gérer les appels entrants destinés audit terminal de voix sur IP (20), d'une requête pour que ledit serveur (50) associe le numéro de téléphone dudit terminal de voix sur IP (20) avec un préfixe de routage (PF₃) associé à ladite plateforme de voix sur IP (40₃).

2. Procédé de gestion des appels selon la revendication 1, **caractérisé en ce que**, au cours de ladite étape (E20) d'obtention, le proxy SIP (10) obtient, auprès de la base de données (45), l'adresse d'une plateforme de voix sur IP nominale (40₃) et l'adresse d'au moins une plateforme de voix sur IP de secours (40₄) associées audit terminal de voix sur IP (20), ladite étape (E30) d'enregistrement dudit proxy SIP (10) étant effectuée de façon privilégiée auprès de ladite plateforme de voix sur IP nominale (40₃), et en cas d'échec auprès d'une desdites plateformes de voix sur IP de secours (40₄) selon un ordre de priorité associé à ces plateformes de secours (40₄).

3. Procédé de gestion des appels selon la revendication 1 ou 2, **caractérisé en ce qu'**il comporte :
- une étape (F60) de routage, vers ledit terminal de voix sur IP (20), d'un appel entrant destiné à ce terminal (20) et reçu de la plateforme de voix sur IP (40₃) auprès de laquelle ledit dispositif proxy (20) est enregistré.

4. Procédé de gestion des appels selon l'une quelconque des revendications 1 à 3, **caractérisé en ce qu'**il comporte :
- une étape (G10) de réception d'un appel émis par ledit terminal de voix sur IP (10) ; et
- une étape (G20) de routage dudit appel vers la plateforme VoIP (40₃) auprès de laquelle ledit dispositif proxy (10) est enregistré.

5. Procédé de gestion des appels selon l'une quelconque des revendications 2 à 4, **caractérisé en ce qu'**il comporte :
- une étape (H10) de détection d'une panne affectant la plateforme VoIP (40₃) auprès de laquelle ledit dispositif proxy (10) est enregistré ;
- une étape (H30) d'enregistrement dudit proxy SIP (10) auprès d'une dite plateforme de voix sur IP de secours (40₄) selon ledit ordre de priorité ; et
- une étape (H50) d'envoi, audit serveur de portabilité des numéros (50) d'une requête pour que ledit serveur (50) associe le numéro de téléphone dudit terminal de voix sur IP (20) avec un préfixe de routage (PF₄) associé à ladite plateforme de voix sur IP de secours (40₄).

6. Procédé de gestion des appels selon la revendication 5, **caractérisé en ce qu'**il comporte :
- une étape (K10) de détection d'un état de fonctionnement normal de ladite plateforme de voix sur IP nominale (40₃);
- une étape (K20) d'attente que le dispositif proxy (10) ne gère plus un appel ; et
- une étape (K30) d'envoi, audit serveur de portabilité des numéros (50) d'une requête pour que ledit serveur (50) associe le numéro de téléphone dudit terminal de voix sur IP (20) avec un préfixe de routage (PF₃) associé à ladite plateforme de voix sur IP nominale (40₃).

7. Proxy SIP (10) comportant :
- un module (15) de réception d'une requête d'enregistrement émise par un terminal de voix sur IP (20) pour s'enregistrer auprès dudit proxy SIP (10);
- un module (16) d'obtention, auprès d'une base de données (45), de l'adresse d'au moins une plateforme de voix sur IP (40₃, 40₄) associée audit terminal de voix sur IP (20) ;
- un module (REG) d'enregistrement dudit proxy SIP (10) auprès d'une dite plateforme de voix sur IP (40₃);
- un module (16) d'envoi, à un serveur de portabilité des numéros (50) configuré pour gérer les appels entrants destinés audit terminal de voix sur IP (20), d'une requête pour que ledit serveur (50) associe le numéro de téléphone dudit terminal de voix sur IP (20) avec un préfixe de routage (PF₃) associé à ladite plateforme de voix sur IP (40₃).

8. Programme d'ordinateur sur un support d'information, ledit programme étant susceptible d'être mis en oeuvre par un ordinateur, ce programme comportant des instructions adaptées à la mise en oeuvre d'un procédé de gestion des appels selon l'une quelconque des revendications 1 à 6.

9. Support d'enregistrement lisible par un ordinateur sur lequel est enregistré un programme d'ordinateur comprenant des instructions pour l'exécution des étapes du procédé de gestion des appels selon l'une quelconque des revendications 1 à 6.
